# EUROPÄISCHE PATENTSCHRIFT

(11) **EP 2 894 811 B1**
(45) Veröffentlichungstag und Bekanntmachung des Hinweises auf die Patenterteilung: **22.05.2019**
(21) Anmeldenummer: 14198205.8
(22) Anmeldetag: 16.12.2014
(51) Int. Cl.: H04L 9/32, G09C 5/00

(54) **Verfahren zur Sicherstellung von Authentizität, Integrität und Anonymität einer Datenverknüpfung, insbesondere bei Präsentation der Datenverknüpfung in Form eines zweidimensionalen optischen Codes**
Method for ensuring authenticity, integrity and anonymity of a data connection, in particular in presentation of the data connection in the form of a two-dimensional optical code
Procédé de sécurisation d'authenticité, d'intégrité et d'anonymat d'un appariement de données, en particulier lors de la présentation de l'appariement de données sous forme d'un code optique bidimensionnel

(30) Priorität: 19.12.2013 DE 102013114493
(43) Veröffentlichungstag der Anmeldung: 15.07.2015
(73) Patentinhaber: Deutsche Telekom AG, 53113 Bonn (DE)
(72) Erfinder: Burlaga, Roland, 52457 Aldenhoven (DE)
(74) Vertreter: Braun-Dullaeus Pannen Emmerling Patent- und Rechtsanwaltspartnerschaft mbB

(56) Entgegenhaltungen:
- WO-A1-99/33221
- US-A1- 2012 308 003
- US-B1- 7 093 130
- Ietf: "RFC 5280 - Internet X.509 Public Key Infrastructure Certificate and Certificate Revocation List (CRL) Profile", , 1. Mai 2008 (2008-05-01), XP055209498, Gefunden im Internet: URL:https://tools.ietf.org/html/rfc5280 [gefunden am 2015-08-25]

## Beschreibung

Optische Codes wie z. B. Barcodes sind in vielen Bereichen, insbesondere der Identifikation von Produkten, verbreitet. Sie ermöglichen die schnelle und zuverlässige Erfassung der in ihnen kodierten Daten mit optischen Scannern, etwa in Logistikprozessen oder beim Verkauf von Waren an Kassensystemen. Im Gegensatz zu vielen anderen modernen Verfahren der berührungslosen Identifikation wie RFID, NFC o. ä. sind optische Codes sehr preisgünstig und sehr einfach in gängigen Druckverfahren auf nahezu beliebigen Gütern und Dokumenten aufzubringen. Häufig werden sogar verschiedene Verfahrensstufen durch Aufkleber mit entsprechendem Code pro Stufe über den vorhergehenden geklebt.

Im typischen Produktumfeld und der Logistik werden die Codes in geschlossenen Systemen verwendet, d. h. dass ein Vertrauen gegenüber der Authentizität und Integrität des optischen Codes beim Erfassenden (Scanner) besteht - sei es durch Kenntnis der Warenpalette und "Freigabe" des Produkts durch Kassierer/Kassiererin und Kunden/Kundin im typischen Einzelhandelsumfeld oder innerhalb von Logistikketten oder innerhalb von Produktionsbetrieben, bei denen auf andere Weise gewährleistet ist, dass der Gegenstand, welcher den Code trägt, nicht verändert oder gefälscht sein kann.

In den letzten Jahren werden optische Codes aber auch in Kombination mit der elektronischen Kommunikation, Bezahlsystemen, Voucher- oder Ticketsystemen genutzt, um Transaktionen auf einem zweiten, von der Datenkommunikation unabhängigen Weg zu bestätigen oder Verweise auf elektronische Informationen (z. B. im Internet) auf Drucksachen oder Werbetafeln zu präsentieren. Besondere Verbreitung außerhalb der Produktidentifikation und Logistikprozesse hat dabei die Variante der Quick Response Codes (QR-Codes) der Firma Denso, Japan, gewonnen. Diese optischen 2D Codes werden in Werbeanzeigen, auf Produkten oder in Drucksachen genutzt, um auf zusätzliche Informationen im Internet zu verweisen.

Sie enthalten dazu kodiert eine Datenverknüpfung, vorzugsweise einen typischen Internetlink in der Form von URLs (Uniform Resource Locators). Die Codes können durch ein modernes Mobilgerät, beispielsweise ein modernes Telekommunikations-Endgerät in Form eines Smartphones, mit Kamera und einer Software, welche solche Codes auswerten kann, auf einfache Weise gescannt werden. Die Scannersoftware ruft - für den Fall, dass es sich um eine kodierten Internetlink handelt - die entsprechende Webseite in einem mobilen Webbrowser auf dem Mobilgerät auf.

Durch die zunehmende Verbreitung dieser Codes in allen Lebensbereichen, werden sie interessant für verbrecherische Angriffe auf Anwender, die zum Ziel haben, an wertvolle Informationen zum Beispiel zum Login auf Bankkonten o. ä. zu gelangen (sogenanntes "Phishing").

Aufgabe der vorliegenden Anmeldung ist es, solche Angriffe zu erschweren. Hierzu wird vorgeschlagen, eine Authentizitäts- und Integritätsprüfung für die in dem optischen Code enthaltenen Nutzdaten bereit zu stellen.

Die Aufgabe wird durch ein Verfahren und ein entsprechendes Computerprogrammprodukt, wie in den unabhängigen Ansprüchen beansprucht, gelöst. Bevorzugte Ausführungsformen werden in den abhängigen Ansprüchen definiert. US 2012/0308003 A1 zeigt ein Verfahren zum Erstellen und zum Auslesen eines optischen Codes bei dem die Nachricht des Codes zusätzlich verschlüsselt auf dem Code wiedergegeben ist. Mittels eines ebenfalls auf dem Code dargestellten öffentlichen Schlüssels kann die verschlüsselte Nachricht entschlüsselt und mit der Originalnachricht verglichen werden. Stimmen beide überein, ist der Code erfolgreich verifiziert. Diese Verifizierung kann beispielsweise durch ein herkömmliches Smartphone durchgeführt werden.

WO 99/33221 beschreibt Signiergerät zum Erzeugen digitaler Signaturen von Dokumenten und beschreibt zudem Sicherheitsmaßnahmen beim Senden von digitalen Signaturen über ein unsicheres Netzwerk, indem HASH-Werte von Datenelementen erzeugt und dann verschlüsselt werden, wobei zusätzlich Benutzeridentifikationsdaten (U), die von einem physisch anwesenden Benutzer erhalten werden, in die digitale Signatur einfließen.

US 7,093,130 B1 lehrt ein Verfahren zum Erzeugen eines fälschungssicheren digitalen Tickets für eine Veranstaltung, bei dem der Ticketverkäufer und die Verkaufsstelle während der Abwicklung unterschiedliche Daten für einzelne Schritte der Transaktion erzeugen, sie verschlüsseln und untereinander austauschen. Um das Ticket zu verifizieren wird auf dem Computer des Ticketverkäufers mit einer Hashfunktion ein Hashwert, ausgehend von einer Zahl R, erzeugt, und an die Verkaufsstelle übermittelt. Dieser Wert wird von der Verkaufsstelle verschlüsselt und zusammen der Zahl R digitale Ticket aufgebracht. Um das digitale Ticket aus zu lesen und zu verifizieren ist ein Auslesegerät in Verbindung mit dem Computer des Ticketverkäufers notwendig. Das Auslesegerät fragt von dem Computer des Ticketverkäufers einen Entschlüsselungscode und die Hashfunktion ab und berechnet mittels dieser Hashfunktion, die ursprünglich vom Computer des Ticketverkäufers benutzt wurde, einen Hashwert und vergleicht diesen mit dem auf das digitale Ticket aufgebrachten Hashwert.

Das erfindungsgemäße Verfahren ermöglicht fälschungssichere optische Codes, insbesondere 2D Codes, welche der Anwender auch ohne Online-Verbindung, also ohne direkten Abgleich mit einer Datenbank oder einem Internetservice, als integer und authentisch erkennen kann. Es setzt eine auf dem Mobilgerät laufende Software voraus, welche vor dem Aufruf eines Links oder der Ausgabe von im 2D Code kodierten Daten Integrität und Authentizität der Daten prüft.

Das erfindungsgemäße Verfahren modifiziert nicht die bekannten Kodierverfahren der optischen Codes, sondern sichert die enthaltenen Informationen in einer Weise, die dem Verfahren der digitalen Signatur ähnelt. Prüfsummen oder weitere zusätzliche durch das Kodierverfahren eingebrachte Daten bleiben unberücksichtigt und obligen diesen Verfahren. Das erfindungsgemäße Verfahren wird auf die Nutzdaten, welche in dem optischen Code enthalten sind, angewandt. Die Nutzdaten aus Sicht des optischen Codes sollen zusätzlich die Sicherheitseigenschaften enthalten und werden zur Vereinfachung im Folgenden als "Trustcode" bezeichnet.

Ein Trustcode zur Präsentation in einem optischen Code kann in der folgender Weise schematisch aufgebaut sein:

### DATA#CAID#HALG#KALG#SIGNATURE

Dabei seien die Elemente definiert zu:
# : Trennzeichen, welches kein erlaubtes Zeichen der zulässigen Menge an Zeichen, welche die anderen Elemente repräsentieren sein darf;
DATA : Daten/Information, die vom Trustcode repräsentiert wird und deren Authentizität und Integrität gesichert wird;
CAID : Für das Verfahren festgelegte und allen Parteien bekannte Kodierung einer vertrauenswürdigen Beglaubigungsinstanz, welche die Authentizität des vorliegenden Trustcodes bestätigt, sogenannte Certification Authority. Um den geringen Speichermengen optischer Codes Rechnung zu tragen, werde eine komprimierte Darstellung einer eindeutigen Enumeration der möglichen Certification Authorities verwendet;
HALG : Komprimierte, eindeutige Kodierung des zur Feststellung der Integrität von DATA verwendeten kryptografischen Hashing-Algorithmus;
KALG : Komprimierte, eindeutige Kodierung des zur Feststellung der Authentizität von DATA verwendeten asymmetrischen Verschlüsselungs-Algorithmus;
SIGNATURE : Die mit dem mit KALG bezeichneten asymmetrischen Verschlüsselungs-Algorithmus verschlüsselte Vereinigung von Hashwert HASH, welcher mittels des mit HALG bestimmten kryptografischen Hashing-Algorithmus über DATA berechnet wurde, und
TOKEN, einem Zufallswert, der zum Zeitpunkt der Generierung des Trustcode von einer vertrauenswürdigen Instanz auf Seite der Certification Authority bestimmt wurde, gegebenenfalls erweitert um ein sogenanntes Padding-Verfahren, wenn dieses für die Sicherheit des asymmetrischen Verschlüsselungs-Algorithmus KALG notwendig sind.

Im Folgenden sei mit "Client" die Einheit aus Nutzer, Mobilgerät zum Scan und Software gemeint, welche einen optischen Code mit Sicherheitsmerkmal "Trustcode" dekodiert und mit "Server" die Einheit aus Dienstleister, technischen Geräten/Instanzen und Certification Authority, welche den optischen Code mit enthaltenem Sicherheitsmerkmal "Trustcode" kodiert.

### Generieren des Trustcodes

Der Server generiert den Trustcode aus ihm von vertrauenswürdiger Seite übergebenen Daten DATA, indem er zunächst den Hashwert HASH gemäß des auf Server-Seite konfigurierten kryptografischen Hashing-Algorithmus HALG berechnet. An den Hashwert HASH wird ein Zufallswert TOKEN hoher Entropie (vorzugsweise nach einem kryptografisch anerkannten Verfahren als ausreichend zufälliger Zufallswert ermittelt) entsprechend des auf Server-Seite konfigurierten Formats angehängt. Der Zufallswert TOKEN wird auf der Server-Seite verknüpft mit dem auszugebenden Trustcode für die zukünftige server-seitige Verifikation gespeichert.

Wenn der auf der Server-Seite konfigurierte asymmetrische Verschlüsselungs-Algorithmus KALG dies erfordert, wird auf die Vereinigung von HASH und TOKEN ein für den Algorithmus definiertes Padding-Verfahren angewandt.

Dieses Ergebnis oder die Vereinigung von HASH und TOKEN wird dann entsprechend des konfigurierten asymmetrischen Verschlüsselungs-Algorithmus unter Anwendung des privaten Schlüssels der Certification Authority verschlüsselt zu SIGNATURE.

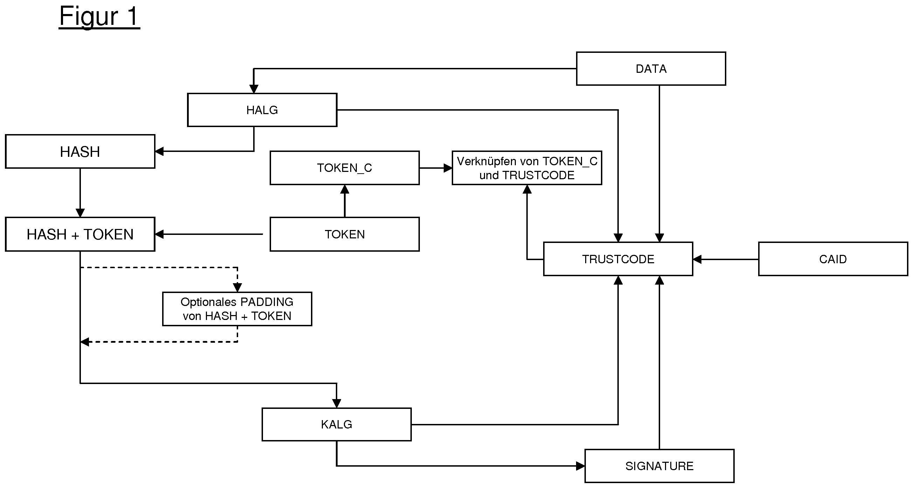

Der Server gibt die so ermittelten Elemente des Trustcode aneinandergereiht und vorzugsweise durch das konfigurierte Trennzeichen # voneinander separiert als Trustcode aus. Diese Verfahrensschritte werden beispielhaft in Figur 1 gezeigt.

### Verifizieren des Trustcodes

Ein Client, welcher über den öffentlichen Schlüssel der Certification Authority verfügt, kann den in einem optischen Code enthaltenen Trustcode auf Integrität und Authentizität prüfen, indem er seinerseits einen Hashwert HASH 2 gemäß des im Trustcode kodierten kryptografischen Hashing-Algorithmus HALG über DATA berechnet und mit dem in SIGNATURE verschlüsselten HASH vergleicht. Sind die Werte identisch, so ist der Trustcode unverfälscht und vom vertrauenswürdigen Aussteller gescannt worden.

Den in SIGNATURE enthaltenen, vom Server vorberechneten Wert HASH ermittelt der Client, indem er SIGNATURE entsprechend des im Trustcode kodierten asymmetrischen Verschlüsselungs-Algorithmus KALG mit dem bekannten, öffentlichen Schlüssel der vertrauenswürdigen Beglaubigungsinstanz Certification Authority entschlüsselt.

Gegebenenfalls muss in Abhängigkeit vom gewählten asymmetrischen Verschlüsselungsverfahren noch ein Padding der entschlüsselten Daten entfernt werden.

Da der im Trustcode einkodierte kryptografische Hashing-Algorithmus ein eindeutiges Ergebnis fester Länge liefert, kann dieser im Vergleich zum vom Client berechneten Wert aus der Vereinigung von HASH und TOKEN innerhalb von SIGNATURE leicht isoliert werden.

Bei diesem Vorgang ermittelt der Client zugleich den Wert TOKEN, welchen er für eine mögliche weitere Kommunikation dem Server zur Identifikation von Client und Trustcode auf der Server-Seite nutzen kann.

### Identifikation eines vom Client erkannten Trustcodes im Rückkanal auf Server-Seite

Wenn der Client aufgrund eines erfolgreich erkannten und auf Authentizität und Integrität erfolgreich geprüften Trustcodes einen Rückkanal bzw. eine Kommunikation mit dem Server aufbaut, kann der ermittelte Wert TOKEN genutzt werden, um dem Server die erfolgreichen Erkennung und Beziehung zu einem bestimmten Trustcode zu signalisieren.

Dazu verschlüsselt der Client den TOKEN mit Hilfe des im Trustcode kodierten asymmetrischen Verschlüsselungs-Algorithmus KALG und dem öffentlichen Schlüssel der Certification Authority und fügt den berechneten Wert als REPLY in einer vordefinierte Syntax für die Kommunikation im Rückkanal ein.

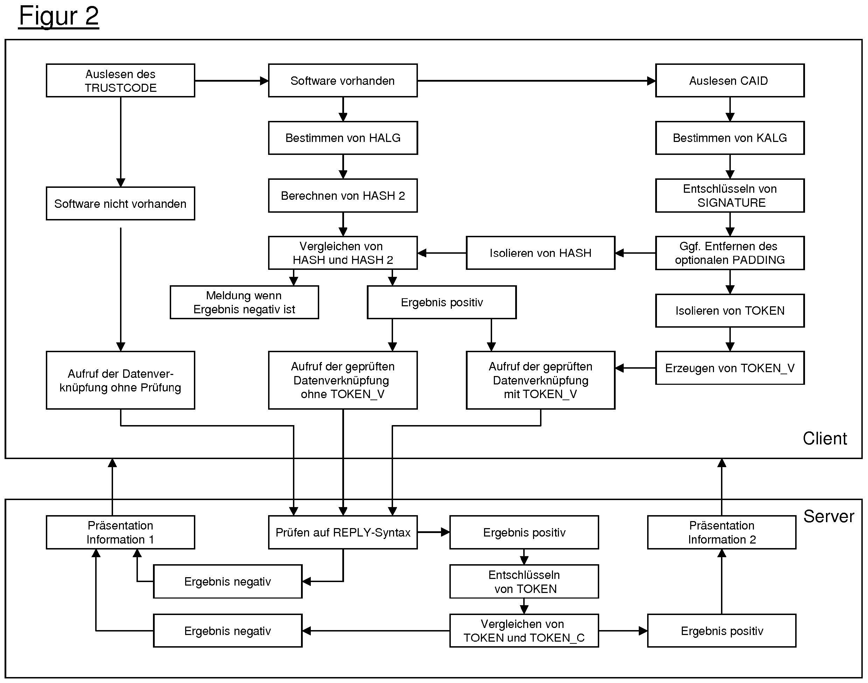

Der Server kann den Wert REPLY mittels des privaten Schlüssels der Certification Authority entschlüsseln und so den TOKEN isolieren, welchen er mit den für die von ihm bei der Erstellung von Trustcodes erzeugten und gespeicherten Wert TOKEN_C vergleicht. Findet der Server den TOKEN, kann er die Rückmeldung eindeutig einem zuvor erzeugten Trustcode zuordnen und gleichzeitig erkennen, dass der Client den Trustcode erfolgreich erkannt hat. Diese Verfahrensschritte werden beispielhaft in Figur 2 gezeigt.

### Praktische Anwendung für Links in OR-Codes

Ein in einen OR-Code einkodierte Datenverknüpfung, insbesondere als Internetlink in Form eines URL kann mit dem erfindungsgemäßen Verfahren sehr leicht abgesichert werden, wenn der gewünschte Link URL als DATA betrachtet und entsprechend behandelt wird. Wenn der Link URL zusätzlich so gestaltet ist, dass er zum Server der Trustcode-Kommunikation zurückführt und der Client beim Aufruf nach erfolgreicher Prüfung auf Authentizität und Integrität den vollständigen Trustcode als URL verwendet, sowie mit dem im Trustcode definierten Trennzeichen noch den Wert REPLY anfügt, kann der Server den Erfolg der Prüfung auf Client-Seite und die Zugehörigkeit zu einem zuvor generierten Trustcode erkennen und dem Client ein anderes Ergebnis präsentieren als bei Aufruf ohne die REPLY, wie beispielhaft in Figur 2 gezeigt.

Insbesondere ist die im erfindungsgemäßen Verfahren beschriebene Syntax geeignet, dass auch Clients, welche Trustcodes nicht erkennen und verifizieren können, einen enthaltenen Link aufrufen können. Der Server kann dann am Fehlen der REPLY erkennen, dass der Aufruf von einem Client ohne Sicherheitsprüfung stammt und diesem Client ein anderes Ergebnis, insbesondere andere Informationen präsentieren.

## Patentansprüche

1. Verfahren zur Sicherstellung von Authentizität und Integrität von Daten (DATA) auf einem optischen Code, umfassend die folgenden Schritte:
- Erzeugung einer Signatur (SIGNATURE) für einen Trustcode, der zur Sicherstellung von Authentizität und Integrität der in dem optischen Code präsentierten Daten (DATA) dient, umfassend:
i. Berechnung eines Hashwerts (HASH) mittels eines kryptographischen Hashing-Algorithmus (HALG) für die Daten (DATA), wobei die Daten (DATA) eine Datenverknüpfung, insbesondere einen Link, umfassen
ii. Zufügen eines Zufallswerts (TOKEN) zum Hashwert (HASH) und Vereinigung und Verschlüsselung von Hashwert (HASH) und Zufallswert (TOKEN) mittels eines privaten Schlüssels eines asymmetrischen Verschlüsselungs-Algorithmus (KALG)
- Generierung des Trustcodes zur Präsentation in dem optischen Code, wobei der Trustcode aufweist:
i. Eine Information über eine Beglaubigungsinstanz (CAID)
ii. Eine Information über den verwendeten Hashing-Algorithmus (HALG)
iii. Eine Information über den verwendeten asymmetrischen Verschlüsselungs-Algorithmus (KALG)
iv. Die Daten (DATA)
v. Die erzeugte Signatur (SIGNATURE)
- Sicherstellung von Authentizität und Integrität der Daten, insbesondere eines Links durch folgende Schritte:
i. Auslesen und Verarbeiten des Trustcodes mittels eines mobilen Telekommunikationsgeräts, insbesondere eines Smartphones
ii. Bestimmung des verwendeten Hashing-Algorithmus (HALG) auf dem Trustcode mittels des mobilen Telekommunikationsgeräts
iii. Berechnung eines zweiten Hashwerts (HASH 2) über Daten (DATA) mittels des mobilen Telekommunikationsgeräts
iv. Bestimmen eines öffentlicher Schlüssel zum verwendeten asymmetrischen Verschlüsselungs-Algorithmus (KALG)
v. Entschlüsseln der Signatur (SIGNATURE) mittels des öffentlichen Schlüssels
vi. Isolieren des Hashwerts (HASH) aus der entschlüsselnden Signatur (SIGNATURE)
vii. Vergleichen des Hashwertes (HASH) mit dem zweiten Hashwert (HASH 2), wobei bei übereinstimmenden Wert von Hashwert (HASH) und zweiten Hashwert (HASH 2) die in der Datenverknüpfung enthaltene Netz-Adresse aufgerufen wird
viii. Isolieren des Zufallswertes (TOKEN) aus der entschlüsselnden Signatur
ix. Verschlüsselung des Zufallswertes (TOKEN) mittels des öffentlichen Schlüssels zu einem verschlüsselten Zufallswert (TOKEN_V)
x. Beifügen des verschlüsselten Zufallswertes (TOKEN_V) in einer vorgegebenen Syntax bei der Kommunikation mit einem Server
xi. Entschlüsseln des von dem Server empfangenen verschlüsselten Zufallswertes (TOKEN_V) mittels des privaten Schlüssels des verwendeten asymmetrischen Verschlüsselungs-Algorithmus (KALG) und Vergleichen des entschlüsselten Zufallswertes zur Verifikation des Trustcodes mit einer gespeicherten Kopie des Zufallswertes (TOKEN_C).

2. Verfahren nach Anspruch 1, **dadurch gekennzeichnet, dass** vor der Verschlüsselung der Vereinigung von Hashwert (HASH) und Zufallswert (TOKEN) ein für den verwendeten asymmetrischen Verschlüsselungs-Algorithmus (KALG) definiertes Padding-Verfahren (PADDING) angewandt wird.

3. Verfahren nach Anspruch 2, **dadurch gekennzeichnet, dass** bei fehlender Übereinstimmung von Zufallswert (TOKEN) und der Kopie des Zufallswerts (TOKEN_C) oder bei nicht empfangenen verschlüsselten Zufallswert (TOKEN_V) ein anderes Ergebnis ausgegeben wird als bei Übereinstimmung von Zufallswert (TOKEN) und der Kopie des Zufallswerts (TOKEN_C).

4. Computerprogrammprodukt, welches, auf einem Server geladen und implementiert, ein Verfahren nach einem der Ansprüche 1 bis 3 ausführt.

## Claims

1. Method for ensuring authenticity and integrity of data (DATA) on an optical code, comprising the following st eps:
- generating a signature (SIGNATURE) for a trust co de, which is used to ensure authenticity and inte grity of the data (DATA) presented in the optical code, comprising:
i. calculating a hash value (HASH) using a cryp tographic hashing algorithm (HALG) for the d ata (DATA), the data (DATA) comprising a dat a linkage, in particular a link,
ii. adding a random value (TOKEN) to the hash va lue (HASH) and unifying and encrypting the h ash value (HASH) and random value (TOKEN) us ing a private key of an asymmetric encryptio n algorithm (KALG),
- generating the trust code for presentation in the optical code, wherein the trust code has:
i. an information item relating to a certificat ion entity (CAID)
ii. an information item relating to the hashing algorithm (HALG) used
iii. an information item relating to the asymmetr ic encryption algorithm (KALG) used
iv. the data (DATA)
v. the generated signature (SIGNATURE)
- ensuring authenticity and integrity of the data, in particular a link, by means of the following s teps:
i. reading out and processing the trust code us ing a mobile telecommunications device, in p articular a smartphone
ii. determining the hashing algorithm (HALG) use d on the trust code using the mobile telecom munications device
iii. calculating a second hash value (HASH 2) ove r data (DATA) using the mobile telecommunica tions device
iv. determining a public key for the asymmetric encryption algorithm (KALG) used
v. decrypting the signature (SIGNATURE) using t he public key
vi. isolating the hash value (HASH) from the dec rypted signature (SIGNATURE)
vii. comparing the hash value (HASH) with the sec ond hash value (HASH 2), wherein if the valu es of hash value (HASH) and second hash valu e (HASH 2) match, the network address contai ned in the data is accessed
viii. isolating the random value (TOKEN) from th e decrypting signature
ix. encrypting the random value (TOKEN) using th e public key into an encrypted random value (TOKEN_V)
x. appending the encrypted random value (TOKEN_ V) in a predefined syntax in the communicati on with a server
xi. decrypting the encrypted random value (TOKEN _V) received by the server using the private key of the asymmetric encryption algorithm ( KALG) used and comparing the decrypted rando m value to verify the trust code with a stor ed copy of the random value (TOKEN_C).

2. Method according to Claim 1, **characterized in that** bef ore the encryption of the unification of the hash valu e (HASH) and random value (TOKEN), a padding method (P ADDING), which is defined for the asymmetric encryptio n algorithm (KALG) used, is applied.

3. Method according to Claim 2, **characterized in that** in the absence of a match between the random value (TOKEN ) and the copy of the random value (TOKEN_C) or if the encrypted random value (TOKEN_V) is not received, a di fferent result is output than if a match is present be tween random value (TOKEN) and the copy of the random value (TOKEN_C).

4. Computer program product, which when loaded and implem ented on a server, executes a method according to any of the Claims 1 to 3.

## Revendications

1. Procédé de garantie de l'authenticité et l'intégrité des données (DATA) sur un code optique, comprenant les étapes suivantes consistant à :
- générer une signature (SIGNATURE) pour un code de confiance, qui sert à garantir l'authenticité et l'intégrité des données (DATA) présentées dans le code optique, comprenant d:
i. Calculer une valeur de hachage (HASH) au moyen d'un algorithme de hachage cryptographique (HALG) pour les données (DATA), dans lequel les données (DATA) comprennent une fusion des données, notamment une liaison,
ii. Ajouter une valeur aléatoire (TOKEN) à la valeur de hachage (HASH) et associer et crypter la valeur de hachage (HASH) et la valeur aléatoire (TOKEN) au moyen d'une clé privée d'un algorithme de cryptage asymétrique (KALG),
- générer le code de confiance en vue de la présentation dans le code optique, dans lequel le code de confiance présente :
i. Une information relative à une instance de certification (CAID),
ii. Une information relative à l'algorithme de hachage utilisé (HALG)
iii. Une information relative à l'algorithme de cryptage asymétrique utilisé (KALG)
iv. Les données (DATA)
v. La signature générée (SIGNATURE)
- garantir l'authenticité et l'intégrité des données, notamment d'une liaison par les étapes suivantes :
i. Lire et traiter le code de confiance au moyen d'un appareil de télécommunication mobile, notamment au moyen d'un Smartphone
ii. Déterminer l'algorithme de hachage utilisé (HALG) sur le code de confiance au moyen de l'appareil de télécommunication mobile
iii. Calculer une deuxième valeur de hachage (HASH 2) relative aux données (DATA) au moyen de l'appareil de télécommunication mobile
iv. Déterminer une clé publique relative à l'algorithme de cryptage asymétrique utilisé (KALG)
v. Décrypter la signature (SIGNATURE) au moyen de la clé publique
vi. Isoler la valeur de hachage (HASH) de la signature décryptée (SIGNATURE)
vii. Comparer la valeur de hachage (HASH) avec la deuxième valeur de hachage (HASH 2), dans lequel en cas de concordance de valeur entre la valeur de hachage (HASH) et la deuxième valeur de hachage (HASH 2) l'adresse de réseau contenue dans la fusion de données est appelée
viii. Isoler la valeur aléatoire (TOKEN) de la signature décryptée
ix. Crypter la valeur aléatoire (TOKEN) au moyen de la clé publique en une valeur aléatoire cryptée (TOKEN_V)
x. Joindre la valeur aléatoire cryptée (TOKEN_V) dans une syntaxe prescrite lors de la communication avec un serveur
xi. Décrypter la valeur aléatoire cryptée reçue par le serveur (TOKEN_V) au moyen de la clé privée de l'algorithme de cryptage asymétrique utilisé (KALG) et comparer la valeur aléatoire décryptée à des fins de vérification du code de confiance avec une copie mémorisée de la valeur aléatoire (TOKEN_C).

2. Procédé selon la revendication 1, **caractérisé en ce que** avant le cryptage du groupement de la valeur de hachage (HASH) et de la valeur aléatoire (TOKEN) un procédé de rembourrage (PADDING) défini pour l'algorithme de cryptage asymétrique utilisé (KALG) est appliqué.

3. Procédé selon la revendication 2, **caractérisé en ce que** en cas d'absence de concordance entre la valeur aléatoire (TOKEN) et la copie de la valeur aléatoire (TOKEN_C) ou en cas de non réception de la valeur aléatoire cryptée (TOKEN_V) un autre résultat n'est émis que en cas de concordance entre la valeur aléatoire (TOKEN) et la copie de la valeur aléatoire (TOKEN_C).

4. Produit de programme informatique, qui, lorsqu'il est chargé et implémenté sur un serveur, met en oeuvre un procédé selon une des revendications 1 à 3.
